## Europäisches Patentamt
## European Patent Office
## Office européen des brevets

(19)

(11) Numéro de publication: **0 075 521**
**B1**

(12)

# FASCICULE DE BREVET EUROPÉEN

(45) Date de publication du fascicule du brevet:
**14.01.87**

(51) Int. Cl.⁴: **B 60 S 1/34**

(21) Numéro de dépôt: **82401719.8**

(22) Date de dépôt: **22.09.82**

(54) **Système d'essuie-glace.**

(30) Priorité: **23.09.81 BE 505235**

(43) Date de publication de la demande:
**30.03.83 Bulletin 83/13**

(45) Mention de la délivrance du brevet:
**14.01.87 Bulletin 87/3**

(84) Etats contractants désignés:
**BE DE FR GB IT**

(56) Documents cité:
**CH-A-244 749**
**FR-A-854 397**
**FR-A-1 117 529**
**FR-A-1 561 395**
**FR-A-2 144 269**
**FR-A-2 203 335**
**US-A-1 660 971**
**US-A-2 324 894**

(73) Titulaire: **ETABLISSEMENTS FLAMME S.P.R.L., 22
rue de la Délivrance, B-7980 Beloil (Stambruges)
(BE)**
Titulaire: **Leroy, André, 64 Chaussée de Binche,
B-7030 Mons (Saint Symphorien) (BE)**

(72) Inventeur: **Flamme, Jean- Marie, 22 rue de la
Délivrance, B-7980 Beloil Stambruges (BE)**
Inventeur: **Leroy, André, 64, Chaussée de Binche,
B-7030 Mons Saint- Symphorien (BE)**

(74) Mandataire: **Peuscet, Jacques, Cabinet Peuscet
68, rue d'Hauteville, F-75010 Paris (FR)**

EP 0 075 521 B1

LIBER, STOCKHOLM 1987

## Description

La présente invention est rélative à un système d'essuie-glace destiné notamment à un véhicule routier, système du genre de ceux qui réalisent une trajectoire non circulaire de l'un quelconque des points d'au moins un balai d'essuie-glace et qui comportent un arbre en mouvement de rotation alternative qui entraîne un bras de guidage dit principal associé audit arbre par une liaison rotoïde, un culbuteur et un bras de guidage secondaire articulé en deux de ces points.

Une telle trajectoire non circulaire est recherchée pour améliorer la visibilité et la qualité d'essuyage par rapport aux systèmes classiques à trajectoire circulaire.

De nombreux systèmes à trajectoire non circulaire ont été proposés. On peut notamment citer ceux qui sont décrits dans FR-A-2 239 873, FR-A-2 194 173, FR-A-2 178 682, FR-A-2 178 683. Ces systèmes sont notamment caractérisés par la présence d'un seul balai articulé sur un seul bras porte-balai dont on déplace l'axe de rotation.

D'autres systèmes d'essuie-glace destinés a obtenir un champ d'essuyage de forme rectangulaire ont également été proposés. Il s'agit essentiellement des systèmes définis par FR-A-2 131 446 et FR-A-2 144 269. Plus précisément, ce dernier document FR-A-2 144 269 concerne un système d'essuie-glace du genre défini précédemment. L'organisation de ces systèmes est sensiblement différente de celle décrite dans les brevets rappelés à l'alinéa précédent: on y trouve essentiellement, outre un balai et un bras porte-balai, un bras de guidage; l'organisation mécanique de ces éléments est telle que l'articulation du balai sur le bras porte-balai décrit une trajectoire rectiligne et que le bras de guidage maintient l'axe du balai selon une direction fixe perpendiculaire à cette trajectoire.

Aucun des systèmes que l'on vient d'évoquer n'a connu jusqu'à présent d'application, essentiellement parce que leur construction s'est avérée peu économique, leur encombrement prohibitif ou leur longévité problématique.

L'invention a pour but, surtout, de fournir un système d'essuie-glace du genre défini précédemment qui ne présente plus, ou à un degré moindre, les inconvénients évoqués ci-dessus.

Selon l'invention, un système d'essuie-glace destiné notamment à un véhicule routier, du genre en question, est caractérisé en ce que le culbuteur relie le bras de guidage principal au balai d'essuie-glace et est articulé au moyen de deux liaisons rotoïdes d'une part audit bras et d'autre part audit balai, en ce que chacune des deux articulations de bras de guidage secondaire comporte au moins deux liaisons rotoïdes, l'une des articulations précitées le reliant au culbuteur et en ce que la liaison rotoïde entre le culbuteur et le bras de guidage principal et la liaison rotoïde entre le culbuteur et le balai d'essuie- glace sont parallèles à une même direction d'axe.

L'invention proposée retient une organisation mécanique associant deux chaînes cinématiques fermées dont certains éléments sont communs, et qui constituent un mécanisme à deux mouvements d'entrée.

Une première chaîne cinématique est constituée d'un arbre en rotation par rapport à la carrosserie, d'un bras de guidage principal articulé sur cet arbre par une liaison rotoïde, d'un culbuteur articulé d'une part sur le bras de guidage et d'autre part sur le balai -éventuellement dédoublé- au moyen de liaisons rotoïdes. L'ensemble des éléments de cette chaîne est entièrement contenu dans un plan contenant l'axe de l'arbre ou parallèle à cet axe; ce plan est animé d'un mouvement d'oscillation par l'intermédlaire de l'arbre qui constitue l'élément d'entrée de cette première chaîne cinématique.

La deuxième chaîne cinématique comporte au moins un élément commun à la première chaîne - le culbuteur - ainsi que des éléments propres - un bras de guidage secondaire articulé en deux de ses points, chaque articulation comportant au moins deux liaisons rotoides, l'une des articulations précitées le reliant aux culbuteur.

Dans une première variante, celle des deux articulations du bras de guidage secondaire, qui n'assure pas la liaison dudit bras avec le culbuteur, peut relier ledit bras à un arbre coudé monté pivotant par rapport à la carrosserie. L'arbre coudé constitue alors le second élément d'entrée du mécanisme. La disposition de l'arbre coudé est généralement quelconque par rapport à l'axe de l'arbre d'emtrée de la première chaîne; par conséquent, le mouvement du bras de guidage secondaire est spatial et s'exerce en dehors du plan oscillant qui contient le balai.

Dans le cas de référence où le balai essuie un pare-brise plan, perpendiculaire à l'arbre d'entrée et parallèle au bras de guidage principal, la fonction de la première chaîne cinématique est d'imposer à tout instant la position angulaire du balai celle de la seconde chaîne est d'astreindre un point donné du balai à décrire une trajectoire qui s'écarte d'une circonférence. Cet écart est défini par l'excentricité de l'arbre coudé, par la disposition relative des articulations du culbuteur ainsi que par celle des axes des arbres des deux chaînes cinématiques.

Il en résulte un premier avantage de l'invention: en effet, par une disposition judicleuse de ces articulations, on réalise une amplification du mouvement de l'arbre coudé qui impose l'écart à la trajectoire circulaire; un écart important peut être obtenu par une faible excentricité et il en résulte une implantation facile du mécanisme dans la carrosserie.

Un second avantage de l'invention résulte de ce que le balai est articulé sur un culbuteur qui peut être de petite dimension et que ce culbuteur est articulé sur deux bras dont l'un pivote directement sur la carrosserie. On obtient ainsi un guidage satisfaisant du balai qui est favorable à la qualité de l'essuyage. Ce guidage par deux bras est obtenu sans que la visibilité du conducteur soit détériorée par rapport au guidage classique: les positions instantanées du bras de guidage secondaire s'écartent en effet assez peu du bras de guidage principal.

Un troisième avantage de l'invention réside dans la possibilité qu'offre l'organisation mécanique proposée d'obtenir un écart important à la trajectoire circulaire sans qu'il en résulte un pivotement du balai autour de l'un des points matérialisés, ce qui n'est pas le cas de la plupart des mécanismes proposés antérieurement.

Un quatrième avantage de l'invention réside dans la faible masse des éléments du système qui créent les écarts à la trajectoire circulaire: ces écarts sont ainsi obtenus sans susciter des efforts d'inertie excessifs aux grandes vitesses de balayage.

Dans un mode de réalisation, le mécanisme objet de l'invention comprend un moto-réducteur et deux transmissions associées, d'une part, au moto-réducteur et, d'autre part, aux deux éléments d'entrée du mécanisme. La transmission, qui impose l'oscillation du bras de guidage principal et du balai, transforme le mouvement de rotation continue du moteur en un mouvement de rotation alternative d'une amplitude égale à celle du balayage. La seconde transmission peut être analogue à la précédente; elle peut également délivrer un mouvement de rotation continue dont la périodicité est égale ou proportionnelle à celle du mouvement d'oscillation du balai.

Dans un autre mode de réalisation, il est également possible de compléter le moto-réducteur par deux transmissions disposées non pas en parallèle, mais en série. L'une des transmissions reçoit alors son mouvement d'entrée non pas directement du moto-réducteur mais de l'autre transmission.

Dans une deuxième variante du système objet de l'invention, et pour certaines proportions de pare-brise, les effets recherchés peuvent être obtenus en simplifiant le système comme suit: on annule l'excentricité de l'arbre coudé de la seconde chaîne cinématique, dont le mouvement et la transmission qui le crée deviennent ainsi superflus. Les éléments propres de la deuxième chaîne cinématique se ramènent alors à un seul bras de guidage secondaire articulé, d'une part, au culbuteur et, d'autre part, sur un élément fixe par rapport à la carrosserie du véhicule.

Dans des applications plus complexes, le système objet de l'invention peut être utilisé pour réaliser des balayages à plusieurs balais. Dans ces applications, on utilise autant de systèmes qu'il y a de trajectoires non-circulaires à réaliser indépendamment.

Le dessin illustre, à titre d'exemple, une réalisation particulière conforme à l'invention, comportant un seul balai et un seul bras de guidage principal.

Sur ce dessin:

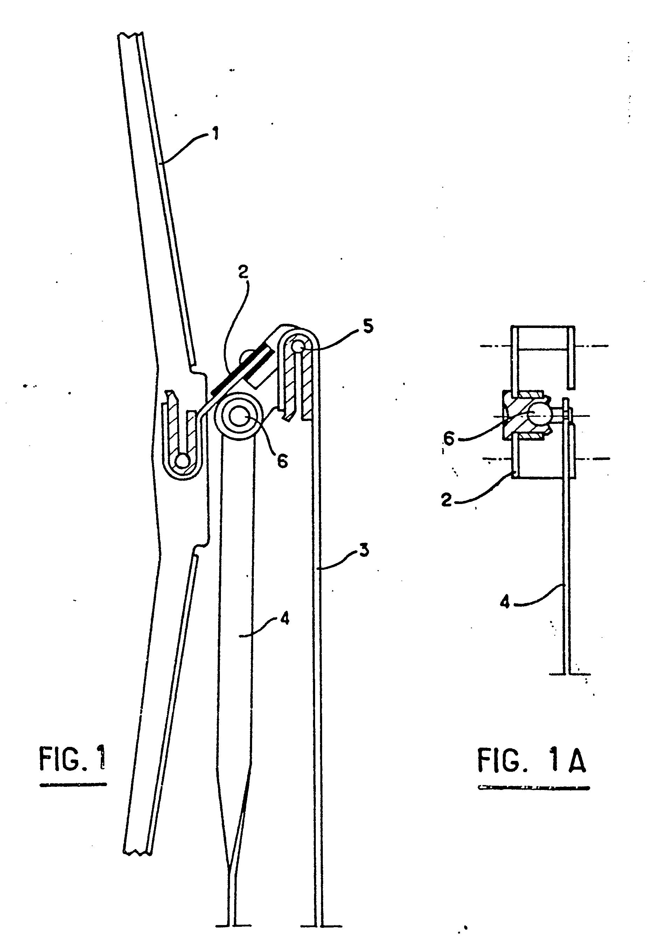

- la figure 1 présente la partie supérieure du système dans un plan sensiblement perpendiculaire au parebrise plan de référence;
- la figure 1A présente le détail de l'articulation du bras de guidage secondaire sur le culbuteur;

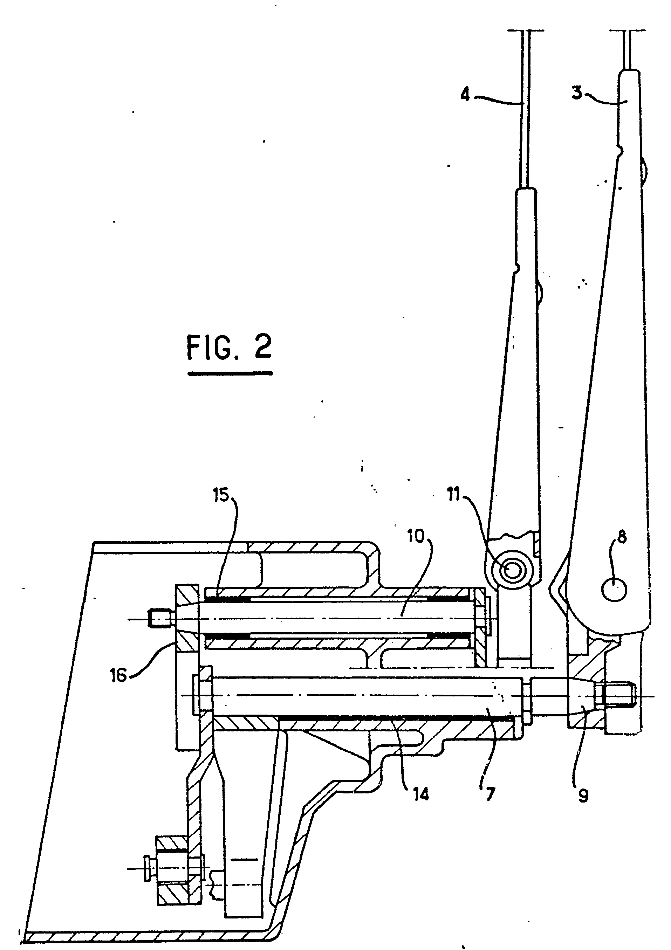

- la figure 2 présente, en coupe partielle, la partie inférieure du système de la figure 1;

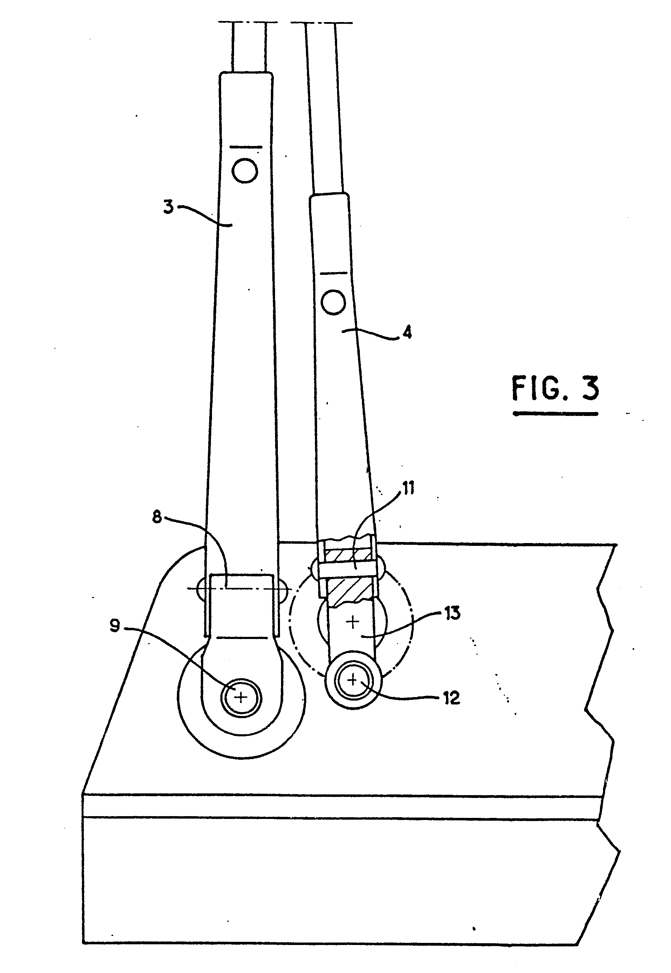

- la figure 3 présente une vue du système des figures 1 et 2 dans un plan parallèle au pare-brise de référence.

Le balai 1 est monté de façon amovible sur le culbuteur 2 au moyen d'une articulation classique. Le culbuteur 2 est lié aux bris de guidage 3 et 4 par les articulations respectives 5 et 6; l'articulation 5 est une liaison rotoïde d'axe perpendiculaire au plan moyen du culbuteur 2; l'articulation 6 est une liaison sphérique. Les axes d'articulation culbuteur/balai et culbuteur/bras de guidage principal sont parallèles; le point d'articulation 6 est disposé entre les deux axes précités.

Le bras de guidage principal 3 est articulé sur l'arbre 7 au moyen d'une liaison rotoide 8 et d'un assemblage 9 comme dans les mécanismes traditionnels.

Le bras de guidage secondaire 4 est articulé sur l'arbre coudé 10 au moyen de deux liaisons rotoides 11 et 12 d'axes perpendiculaires, reliées par un levier intermédiaire 13.

L'arbre 7 et l'arbre coudé 10 sont guidés en rotation par rapport à la carrosserie par les guidages rotoides 14 et 15; leurs mouvements sont synchronisés par une transmission 16.

En variante, l'articulation 6 est assurée par deux liaisons rotoïes dont l'une est parallèle à l'axe 5.

## Revendications

1. Système d'essuie-glace destiné notamment à un véhicule routier, réalisant une trajectoire non circulaire de l'un quelconque des points d'au moins un balai (1) d'essuie-glace et comportant un arbre (7) en mouvement de rotation alternative qui entraîne un bras de guidage (3) dit principal associe audit arbre par une liaison rotoïde, un culbuteur (2) et un bras de guidage secondaire (4) articulé en deux de ses points, caractérisé en ce que le culbuteur (2) relie le bras de guidage principal (3) au balai d'essuie-glace (1) et est articulé au moyen de deux liaisons rotoïdes d'une part audit bras (3) et d'autre part audit balai (1), en ce que chacune des deux articulations de bras de guidage secondaire (4) comporte au moins deux liaisons rotoïdes, l'une des articulations précitées le reliant au culbuteur (2), et en ce que la liaison rotoïde entre le culbuteur (2) et le bras de guidage principal (3) et la liaison rotoïde entré le culbuteur (2) et le balai d'essuie-glace (1) sont parallèles à une même direction d'axe.

2. Système selon la revendication 1, caractérisé en ce que celle des deux articulations du bras de guidage secondaire (4), qui n'assure pas la liaison dudit bras avec le culbuteur (2), relie ledit bras (4) à un arbre coudé (10) monté pivotant par rapport à la carrosserie du véhicule.

3. Système selon la revendication 2, caractérisé en ce que l'arbre coudé (10) est entraîné en rotation.

4. Système selon la revendication 3, caractérisé en ce que les mouvements des deux arbres (7, 10) associés aux deux bras de guidage (3, 4) sont synchronisés par une transmission (16).

5. Système selon la revendication 3, caractérisé en ce que les mouvements des deux arbres (7, 10) associés aux deux bras de guidage (3, 4) sont indépendants.

6. Système selon l'une des revendications 4 ou 5, caractérisé en ce que les mouvements des deux arbres (7, 10) associés aux deux bras de guidage (3, 4) sont assures par un moto-réducteur.

7. Système selon la revendication 1, caractérisé en ce que le bras de guidage secondaire (4) est articulé sur un élément fixe par rapport à la carrosserie du véhicule.

8. Système selon l'une des revendication 1 à 7, caractérisé en ce que l'articulation du bras de guidage secondaire (4) sur le culbuteur (2) est assurée par deux liaisons rotoïdes.

9. Système selon la revendication 8, caractérisé en ce que l'une des deux liaisons rotoïdes de l'articulation du bras de guidage secondaire (4) sur le culbuteur (2) est parallèle à la direction d'axe D.

10. Système selon l'une des revendications 1 à 9, caractérisé en ce que le point d'articulation (6) du bras de guidage secondaire (4) sur le culbuteur (2) est compris entre les deux liaisons rotoïdes du culbuteur (2).


## Patentansprüche

1. Scheibenwischsystem, insbesondere für ein Straßenfahrzeug, bei welchem eine beliebige Stelle wenigstens eines Wischerblattes (1) eine nicht kreisförmige Bewegungsbahn ausführt und welches eine Welle (7) mit abwechselnder Antriebsdrehrichtung, welche einen mit der Welle über eine Drehverbindung verbundenen Hauptführungsarm (3) antreibt, einen Schwinghebel (2) und einen an zwei Stellen mit Gelenken versehenen Nebenführungsarm (4) aufweist, dadurch gekennzeichnet, daß der Schwinghebel (2) den Hauptführungsarm (3) mit dem Wischerblatt (1) verbindet und mittels zweier Drehverbindungen einerseits an dem Hauptführungsarm (3) und andererseits an dem Wischerblatt (1) angelenkt ist, daß jedes der beiden Gelenke des Nebenführungsarmes (4) mindestens zwei Drehverbindungen umfaßt, wobei der Nebenführungsarm durch eines der Gelenke mit dem Schwinghebel (2) verbunden ist, und daß die Drehverbindung zwischen dem Schwinghebel (2) und dem Hauptführungsarm (3) und die Drehverbindung zwischen dem Schwinghebel (2) und dem Wischerblatt (I) zu einer selben Achsenrichtung parallel sind.

2. System gemäß Anspruch 1, dadurch gekennzeichnet, daß dasjenige der beiden Gelenke des Nebenführungsarmes (4) durch welches dieser nicht mit dem Schwinghebel (2) verbunden ist, diesen Arm (4) mit einer gekröpften, mit Bezug auf die Fahrzeugkarosserie drehbar gelagerten Welle verbindet.

3. System gemäß Anspruch 2, dadurch gekennzeichnet, daß die gekröpfte Welle (10) während der Drehbewegung angetrieben wird.

4. System gemäß Anspruch 3, dadurch gekennzeichnet, daß die Bewegungen der beiden mit den zwei Führungsarmen (3, 4) verbundenen Wellen (7,10) durch eine Übersetzung (16) synchronisiert sind.

5. System gemäß Anspruch 3, dadurch gekennzeichnet, daß die Bewegungen der beiden mit den zwei Führungsarmen (3, 4) verbundenen Wellen (7,10) voneinander unabhängig sind.

6. System gemäß einem der Ansprüche 4 oder 5, dadurch gekennzeichnet, daß die Bewegungen der beiden mit den zwei Führungsarmen (3, 4) verbundenen Wellen (7,10) von einem Getriebemotor sichergestellt werden.

7. System gemäß Anspruch 1, dadurch gekennzeichnet, daß der Nebenführungsarm (4) an einem, mit Bezug auf die Fahrzeugkarosserie feststehenden Element gelenkig gelagert ist.

8. System gemäß einem der Ansprüche 1 bis 7, dadurch gekennzeichnet, daß die gelenkige Lagerung des Nebenführungsarms (4) am Schwinghebel (2) durch zwei Drehverbindungen sichergestellt ist.

9. System gemäß Anspruch 8, dadurch gekennzeichnet, daß eine der beiden Drehverbindugnen des Gelenks des Nebenführungsarms (4) auf dem Schwinghebel (2) parallel zur Richtung der Achse D ist.

10. System gemäß einem der Ansprüche 1-9, dadurch gekennzeichnet, daß die Stelle der Anlenkung (6) des Nebenführungsarms (4) am Schwinghebel (2) zwischen den beiden Drehverbindungen des Schwinghebels (2) liegt.


## Claims

1. Windscreen wiper system intended particularly for a road vehicle, in which any one of the points of at least one windscreen wiper blade (1) executes a non-circular path and which has a shaft (7) in alternating rotational movement, driving a guide arm (3), called a main guide arm, associated with the said shaft by means of a rotoidal connection, a rocker (2) and a secondary guide arm (4) articulated at two of its points, characterized in that the rocker (2) connects the main guide arm (3) to the windscreen wiper blade (1) and is articulated on the one hand on the said arm (3) and on the other hand on the said wiper blade (1) by means of two rotoidal connections, in that each of the two joints of the secondary guide arm (4) comprises at least two rotoidal connections, one of the above-mentioned joints connecting it to the rocker (2), and in that the rotoidal connection between the rocker (2) and the main guide arm (3) and the rotoidal connection between the rocker (2) and the windscreen wiper blade (1) are parallel to one and the same axial direction.

2. System according to Claim 1, characterized in that that of the two joints of the secondary guide arm (4) which does not connect the said arm to the rocker (2) connects the said arm (4) to a crankshaft (10) mounted pivotally relative to the vehicle body.

3. System according to Claim 2, characterized in that the crankshaft (10) is driven in rotation.

4. System according to Claim 3, characterized in that the movements of the two shafts (7, 10) associated with the two guide arms (3, 4) are synchronized by means of a transmission (16).

5. System according to Claim 3, characterized in that the movements of the two shafts (7, 10) associated with the two guide arms (3, 4) are independent.

6. System according to one of Claims 4 or 5, characterized in that the movements of the two shafts (7, 10) associated with the two guide arms (3, 4) are effected by means of a geared motor.

7. System according to Claim 1, characterized in that the secondary guide arm (4) is articulated on an element which is fixed relative to the vehicle body.

8. System according to one of Claims 1 to 7, characterized in that the articulation of the secondary guide arm (4) on the rocker (2) is effected by means of two rotoidal connections.

9. System according to Claim 8, characterized in that one of the two rotoidal connections effecting the articulation of the secondary guide arm (4) on the rocker (2) is parallel to the axial direction D.

10. System according to one of Claims 1 to 9, characterized in that the point of articulation (6) of the secondary guide arm (4) on the rocker (2) is located between the two rotoidal connections of the rocker (2).

FIG. 1

FIG. 1 A

FIG. 2

FIG. 3